# FASCICULE DE BREVET EUROPEEN

(11) **EP 4 634 107 B1**
(45) Date de publication et mention de la délivrance du brevet: **28.10.2026**
(21) Numéro de dépôt: 23834262.0
(22) Date de dépôt: 04.12.2023
(51) Int. Cl.: B66F 9/06, B66F 9/075, B66F 9/18, G05D 1/00, G05D 1/243, G05D 1/667

(54) **PROCÉDÉ DE CONTRÔLE DU POSITIONNEMENT D'UN CHARIOT ÉLÉVATEUR AUTONOME PAR RAPPORT À UNE CHARGE ANNULAIRE À LEVER**
VERFAHREN ZUR STEUERUNG DER POSITIONIERUNG EINES AUTONOMEN GABELSTAPLERS IN BEZUG AUF EINE ZU HEBENDE RINGFÖRMIGE LAST
METHOD FOR CONTROLLING THE POSITIONING OF AN AUTONOMOUS FORKLIFT RELATIVE TO AN ANNULAR LOAD TO BE LIFTED

(30) Priorité: 14.12.2022 FR 2213357
(43) Date de publication de la demande: 22.10.2025
(73) Titulaire: COMPAGNIE GENERALE DES ETABLISSEMENTS MICHELIN, 63000 Clermont-Ferrand (FR)
(72) Inventeur: BINDA, Yann, 63040 CLERMONT-FERRAND CEDEX 9 (FR); FAURE, Florian, 63040 CLERMONT-FERRAND CEDEX 9 (FR); GOUTTE, Guillaume, 63040 CLERMONT-FERRAND CEDEX 09 (FR); PELLISSIER DE FELIGONDE, Amaury, 63040 CLERMONT-FERRAND CEDEX 09 (FR); BERNARD, Mélanie, 63040 CLERMONT-FERRAND CEDEX 09 (FR)
(74) Mandataire: M.F.P. Michelin
(86) Numéro de dépôt international: PCT/FR2023/051917
(87) Numéro de publication internationale: WO 2024/126923

(56) Documents cités:
- EP-B1- 2 767 925
- US-A1- 2018 319 594
- US-A1- 2020 024 114
- US-A1- 2022 153 562
- US-B1- 9 715 232

## Description

### Domaine technique

La présente invention concerne le domaine des véhicules autonomes pour le transport automatisé de charges, tels que des chariots élévateurs autonomes.

### Etat de la technique antérieure

Les véhicules autonomes pour le transport de charges sont de plus en plus utilisés pour gagner en productivité et pour améliorer la gestion logistique dans des usines ou dans des entrepôts.

Les chariots élévateurs automatisés sont un exemple de tels véhicules et permettent par exemple de charger, transporter et positionner en hauteur une charge sans intervention humaine.

Cependant, dans des environnements tels que des usines ou des entrepôts, l'intervention humaine reste nécessaire en complément des opérations automatisées, par exemple pour contrôler le bon déroulement de ces opérations ou pour réaliser des tâches qui ne peuvent pas être effectuées par des machines seules. Ces environnements sont donc partagés entre des humains et des machines autonomes.

La sécurité des personnes est fondamentale dans de tels environnements de travail et requiert en conséquence la mise en place de procédures spécifiques.

Par exemple, lors des opérations de prise d'une charge sur un rayonnage de stockage, il convient notamment de contrôler la position du chariot relativement à la charge.

Si le positionnement du chariot par rapport à la charge n'est pas correct, il y a des risques de basculement de la charge lors de la prise et donc des risques d'accident.

US2018/319594A1 divulgue un procédé de contrôle du positionnement d'un chariot élévateur autonome par rapport à une charge annulaire à lever et à transporter selon le préambule de la revendication 1.

### Exposé de l'invention

Au vu de ce qui précède, le but de l'invention est d'accroître la sécurité des opérations de prise de charge par un chariot.

L'invention a pour objet un procédé de contrôle du positionnement d'un chariot élévateur autonome par rapport à une charge annulaire à lever et à transporter, ledit chariot comportant une fourche mobile verticalement munie d'au moins un bras.

Le procédé comprend une étape d'acquisition d'au moins une image de la charge annulaire par au moins une caméra 3D restituant un nuage de points de coordonnées mesurés dans un repère associé à ladite caméra 3D, ladite caméra 3D étant fixée sur le chariot élévateur autonome en étant centrée par rapport à la fourche et ayant un axe de visée orienté vers l'avant selon un axe longitudinal dudit chariot.

Le procédé comprend en outre une étape de traitement numérique de ladite image obtenue à l'étape d'acquisition comprenant une sous-étape de détection d'au moins un cercle localisé sur une face avant de la charge annulaire et correspondant au diamètre intérieur ou au diamètre extérieur de la charge annulaire, et une sous-étape de calcul d'un décalage, dans un plan perpendiculaire à l'axe de visée, entre le centre dudit cercle détecté et le centre de ladite caméra 3D, ledit décalage étant représentatif d'un défaut de centrage du chariot par rapport à la charge annulaire.

Le procédé comprend également une sous-étape de détermination d'un plan correspondant à la face avant de la charge annulaire, et une sous-étape de calcul de l'angle entre la normale audit plan déterminé et l'axe de visée de ladite caméra 3D, ledit angle étant représentatif d'un défaut d'angle du chariot par rapport à la charge annulaire.

Le procédé comprend en outre une étape d'arrêt du chariot si au moins une des valeurs calculées de défaut d'angle ou de défaut de centrage est supérieure en valeur absolue à une valeur limite prédéfinie.

Par « face avant » de la charge annulaire, on entend la face frontale de la charge qui est orientée du côté de la caméra.

Un tel procédé permet de déterminer la position relative entre la charge et le chariot et d'accroître la sécurité des opérations en arrêtant le chariot si au moins une valeur de défaut de centrage ou de défaut d'angle dépasse une valeur limite prédéfinie.

Avantageusement, l'étape de traitement numérique peut comprendre en outre des sous-étapes de calcul de la profondeur et du diamètre extérieur de la charge annulaire, ladite étape d'arrêt du chariot étant réalisée si les valeurs calculées de la profondeur et du diamètre extérieur de la charge annulaire ne correspondent pas à des valeurs prédéfinies.

La prise de charge est réalisée par le chariot seulement si les mesures de profondeur et du diamètre extérieur correspondent à des valeurs prédéfinies permettant ainsi de s'assurer que la charge en regard du chariot est bien conforme à celle devant être prise, et donc d'accroître encore la sécurité des opérations.

Dans un mode de réalisation, le procédé comprend en outre une étape préalable de réception par le chariot d'une mission attribuée comprenant les valeurs prédéfinies de la profondeur et du diamètre extérieur de la charge annulaire à transporter.

Selon une caractéristique, le calcul de la profondeur de la charge annulaire est réalisé à partir du cercle intérieur correspondant au diamètre intérieur de ladite charge annulaire et de diamètre D₁₆, d'un cercle intérieur localisé sur une face arrière de la charge annulaire et correspondant à une surface intérieure de ladite charge annulaire et de diamètre D₁₇, et de la distance d entre ladite caméra 3D et la face avant de la charge selon l'équation suivante : $P = d \times \frac{{D}_{16} - {D}_{17}}{{D}_{17}}$ (Eq.1)

Par « face arrière » de la charge annulaire, on entend la face frontale de la charge qui est orientée du côté opposé à la caméra. Les faces arrière et avant délimitent l'épaisseur de la charge.

Selon une autre caractéristique, la profondeur de la charge annulaire est égale à l'écart maximal entre les coordonnées des points d'une surface intérieure de la charge annulaire comprise entre le cercle intérieur correspondant au diamètre intérieur de ladite charge annulaire et de diamètre D₁₆, et un cercle intérieur localisé sur une face arrière de la charge annulaire et correspondant à une surface intérieure de ladite charge annulaire et de diamètre D₁₇, ledit écart étant mesuré selon l'axe du repère orienté selon l'axe de visée de ladite caméra 3D.

Avantageusement, l'étape d'acquisition peut comprendre les sous-étapes successives suivantes : une première sous-étape d'acquisition d'au moins une image, une sous-étape d'avancement du chariot vers la charge annulaire d'une distance prédéfinie, et une deuxième sous-étape d'acquisition d'au moins une image réalisée lorsque le chariot a parcouru ladite distance prédéfinie.

Par exemple, les sous-étapes de calcul du défaut de centrage et du défaut d'angle du chariot par rapport à la charge annulaire sont réalisées après la première sous-étape d'acquisition, et les sous-étapes de calcul de la profondeur et du diamètre extérieur de la charge annulaire sont réalisées après la deuxième sous-étape d'acquisition.

Par exemple, la sous-étape de détection comprend la détection du cercle intérieur correspondant au diamètre intérieur de ladite charge, et du cercle extérieur correspondant au diamètre extérieur de la charge annulaire.

Avantageusement, l'étape de traitement numérique comprend une sous-étape de filtrage des images obtenues à l'étape d'acquisition. Cette sous-étape de filtrage est réalisée avant les autres sous-étapes de l'étape de traitement numérique et permet de réduire la quantité des données à traiter en filtrant les points des images obtenues à l'étape d'acquisition pour ne garder que les points faisant partie d'une région d'intérêt particulier. En limitant les calculs aux domaines réduits des zone d'intérêt particulier, le procédé accélère l'obtention des résultats sans dégrader leur qualité. En limitant les données aux zones d'intérêt, la taille de la mémoire nécessaire du module de commande et de traitement numérique d'images associé aux caméras 3D est également réduite.

Selon une caractéristique avantageuse, l'étape d'acquisition d'image comprend une sous-étape préalable de calcul d'un gain optimal de ladite caméra 3D utilisé pour l'acquisition d'images.

Dans un mode de réalisation particulier, l'étape d'acquisition d'au moins une image de la charge est réalisée par une unique caméra 3D. En variante, l'étape d'acquisition peut être réalisée par plusieurs caméras 3D.

Selon un autre aspect, l'invention a pour objet un chariot élévateur autonome comprenant une fourche mobile verticalement munie d'au moins un bras, au moins une caméra 3D d'acquisition d'au moins une image de données de nuages de points, ladite caméra 3D étant fixée sur le chariot élévateur autonome en étant centrée par rapport à la fourche et ayant un axe de visée orienté vers l'avant selon un axe longitudinal dudit chariot, un module de commande et traitement numérique d'images associé à la caméra 3D, un dispositif de télécommunication sans fil, ainsi qu'une unité de contrôle dudit chariot configurée pour l'exécution d'un procédé tel que décrit ci-dessus.

De préférence, l'axe de visée de ladite caméra 3D est horizontal et parallèle à l'axe longitudinal dudit bras de la fourche.

De préférence, l'axe de visée de ladite caméra 3D est situé à une distance inférieure à 100 mm d'un plan horizontal contenant ledit bras de la fourche.

### Brève description des figures

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] est une vue en perspective d'un chariot élévateur autonome selon un exemple de réalisation de l'invention ;
[Fig 2] est une vue de détail du chariot élévateur de la figure 1 ;
[Fig 3] illustre schématiquement le chariot élévateur de la figure 1 lors de son utilisation ;
[Fig 4] est un exemple simplifié d'image acquise par une caméra du chariot élévateur de la figure 1 ; et
[Fig 5] illustre l'organigramme d'un procédé de contrôle du positionnement relatif du chariot et d'une charge selon un mode de mise en œuvre de l'invention.

### Exposé détaillé d'au moins un mode de réalisation

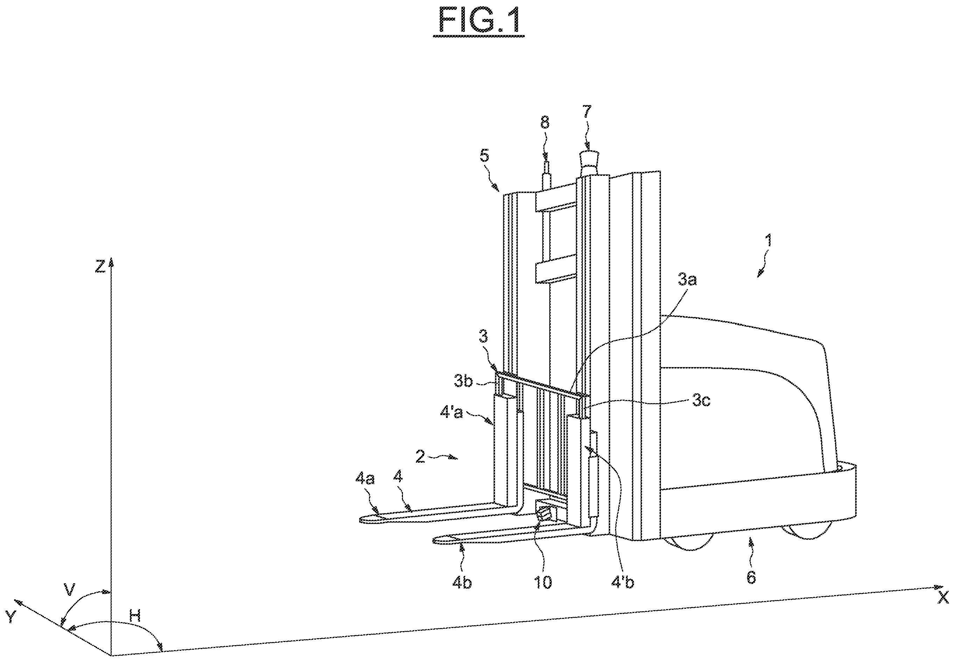

Sur la figure 1 on a représenté les éléments principaux d'un chariot élévateur 1 autonome selon un mode de réalisation de l'invention.

L'architecture du chariot élévateur 1 est donnée à titre d'exemple et ne limite pas l'invention à la seule configuration de l'architecture présentée. Il est entendu que l'invention concerne également des chariots élévateurs prévus pour fonctionner en mode manuel et qui ont été adaptés pour permettre un deuxième mode de fonctionnement en mode autonome.

Le chariot élévateur 1 autonome illustré à la figure 1 comprend un organe de levage 2 comprenant un tablier 3 qui supporte une fourche 4 comprenant deux bras 4a, 4b espacés latéralement et s'étendant vers l'avant du chariot. En variante, la fourche 4 pourrait comprendre un seul bras.

Le tablier 3 forme un cadre. Le tablier 3 est muni d'une traverse supérieure 3a horizontale, et de deux bras 3b, 3c prolongeant verticalement vers le bas la traverse supérieure 3a.

La fourche 4 comprend également deux montants 4'a, 4'b qui sont fixés au tablier 3 et qui supportent chacun un des bras 4a, 4b. Chacun des montants 4'a, 4'b est fixé sur un des bras 3b, 3c du tablier.

Les bras 4a, 4b de la fourche sont généralement utilisés pour s'insérer dans des tunnels d'insertion prévus dans les palettes de transport supportant les charges à soulever. Les montants 4'a, 4'b permettent de soulever les bras 4a, 4b afin de pouvoir soulever une palette à transporter ou un autre type de charge et de pouvoir placer ou attraper une palette ou un autre type de charge en hauteur.

La fourche 4 est apte à se déplacer en translation dans un plan vertical V défini par le tablier 3, le long d'un mât 5 vertical du chariot. Les montants 4'a, 4'b peuvent coulisser le long du mât 5. Les bras 4a, 4b de la fourche sont mobiles entre une position haute extrême, et une position basse extrême qui est illustrée à la figure 1 et qui correspond à une position de roulage. Dans la position basse extrême, les bras 4a, 4b sont situés à distance du sol.

Les axes longitudinaux des bras 4a, 4b sont parallèles. Ces axes longitudinaux sont orientés parallèlement à un axe horizontal X, et définissent un plan horizontal H appelé plan de levage. Les bras 4a, 4b de la fourche 4 sont perpendiculaires au plan vertical V. Les bras 4a, 4b de la fourche 4 sont aussi de préférence déplaçables latéralement l'un par rapport à l'autre.

En variante, les bras 4a, 4b pourraient être également télescopiques ou escamotables, et/ou orientables angulairement autour de leur axe longitudinal.

De manière connue en soi, le chariot 1 est équipé d'un système d'entraînement 6 permettant le déplacement du chariot 1. Le système d'entraînement comprend au moins un moteur électrique ou thermique (non représenté) permettant l'entrainement des roues du chariot 1.

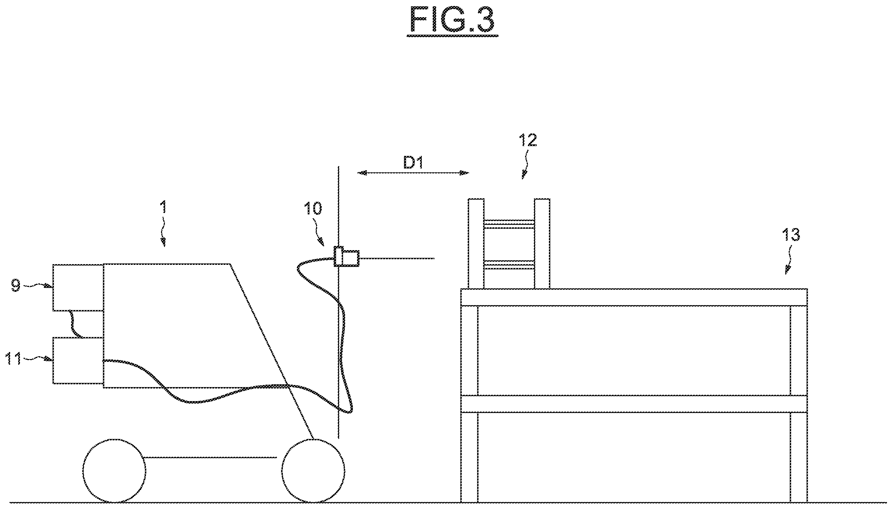

Le chariot 1 est également équipé d'un dispositif de localisation 7 embarqué, d'un dispositif de télécommunication sans fil 8 embarqué et d'une unité de contrôle 9 embarquée (figure 3) recevant les informations issues du dispositif de localisation 7 et du dispositif de télécommunication sans fil 8 pour commander de façon autonome le déplacement du chariot élévateur.

Le chariot 1 est également équipé d'au moins une caméra 3D 10 à mesure de temps de vol (d'acronyme TOF pour « Time Of Flight » en langue anglaise) et d'un module 11 de commande et de traitement numérique d'images associé (figure 3), dit module vision qui commande la prise d'images par la caméra 3D et qui reçoit et interprète les images capturées par la caméra 3D. Dans la suite de la description, le module 11 sera nommé module vision.

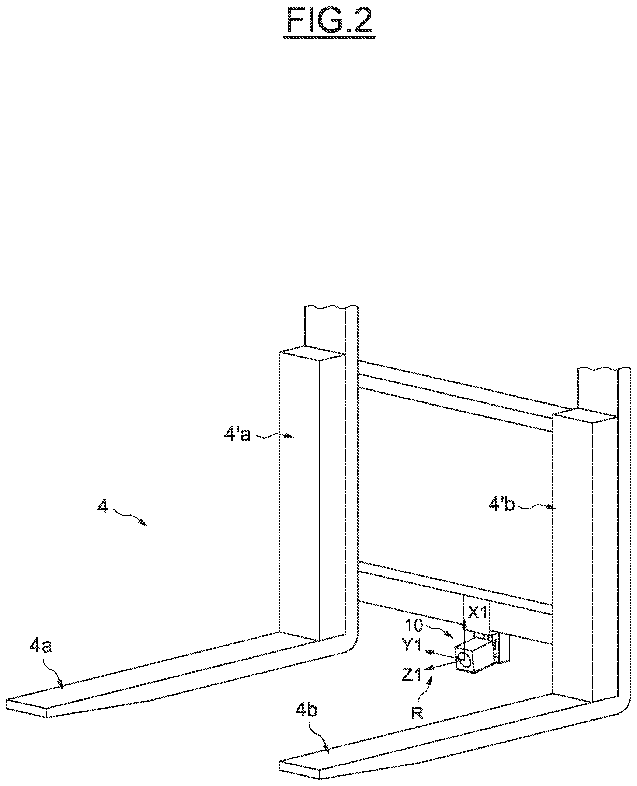

De manière connue en soi, la caméra 3D 10 est apte à capturer une image d'un objet et restituer un nuage de points de coordonnées relatives mesurés par rapport à un référentiel associé à la caméra 3D. Le référentiel associé à la caméra 3D 10 comprend un repère R composé de trois axes orthogonaux X1, Y1, Z1, tel qu'illustré sur la figure 2. L'axe Z1 du repère est ici orienté selon l'axe de visée de la caméra 3D 10, et l'axe Y1 du repère est orienté selon un axe horizontal Y perpendiculaire à l'axe de visée de la caméra 3D 10. Une caméra 3D est apte à mesurer les distances selon les trois axes du repère qui lui est associé. Par exemple, tel qu'illustré le décalage horizontal, vertical ou de profondeur par rapport à la caméra 3D 10 est mesuré selon les axes Y1, X1 ou Z1, respectivement.

La caméra 3D 10 est distincte du dispositif de localisation 7. La caméra 3D 10 est ici distincte du module vision 11. Alternativement, la caméra 3D 10 et le module vision 11 pourraient former un seul ensemble.

L'unité de contrôle 9 comprend les moyens matériels et logiciels pour commander le fonctionnement du système d'entraînement 6 en fonction des informations reçues du dispositif de localisation 7 et du dispositif de télécommunication 8.

L'unité de contrôle 9 commande le fonctionnement du système d'entraînement 6 également en fonction des données issues du module vision 11 et est configurée pour communiquer avec celui-ci. Alternativement, le module vision 11 pourrait être intégré à l'unité de contrôle 9. L'unité de contrôle 9 permet également de commander le déplacement autonome de l'organe de levage 2.

Tel qu'illustré sur les figures 1 et 2, la caméra 3D 10 est centrée par rapport à la fourche 4 et son axe de visée est orienté vers l'avant selon un axe longitudinal du chariot 1. De préférence, l'axe de visée de la caméra 3D 10 est horizontal et parallèle au plan de levage H.

La caméra 3D 10 est fixée sur le tablier 3 à une hauteur constante par rapport au plan de levage H et sans possibilité de déplacement relatif par rapport audit tablier. La caméra 3D 10 est mobile conjointement avec la fourche 4. La caméra 3D 10 est ici fixée en partie basse du tablier 3 au-dessus du plan de levage H. Dans des variantes non illustrées, la caméra 3D 10 peut être fixée au tablier 3 au niveau du plan de levage H ou en-dessous de ce plan. De préférence, l'axe de visée de la caméra 3D 10 est situé à une distance relative inférieure à 100 mm du plan constitué par les bras de la fourche, c'est à dire le plan de levage H.

Comme cela sera décrit plus en détail par la suite, la caméra 3D 10 est apte à capturer des images de l'environnement situé à l'avant du chariot élévateur 1, pour déterminer la position réelle des charges devant être levées et transportées par le chariot élévateur.

Le dispositif de télécommunication sans fil 8 est configuré pour communiquer avec l'unité de contrôle 9 et avec un système informatique de gestion d'entrepôts (non représenté) (en langue anglaise « Warehouse Management System » ou WMS) qui est distant du chariot 1 et destiné à gérer les opérations d'un entrepôt de stockage et à commander une flotte de chariots 1.

Chaque chariot 1 reçoit des instructions sous forme de messages numériques périodiques émis par le système WMS concernant des missions qui lui sont attribuées relatives à des déplacements à effectuer et/ou à des charges à transporter. Chaque chariot 1 est capable de transmettre au système WMS des messages numériques représentatifs du statut des missions qui lui ont été attribuées. Un chariot 1 peut faire remonter par exemple, une erreur rencontrée pendant l'exécution d'une mission en envoyant un code d'erreur.

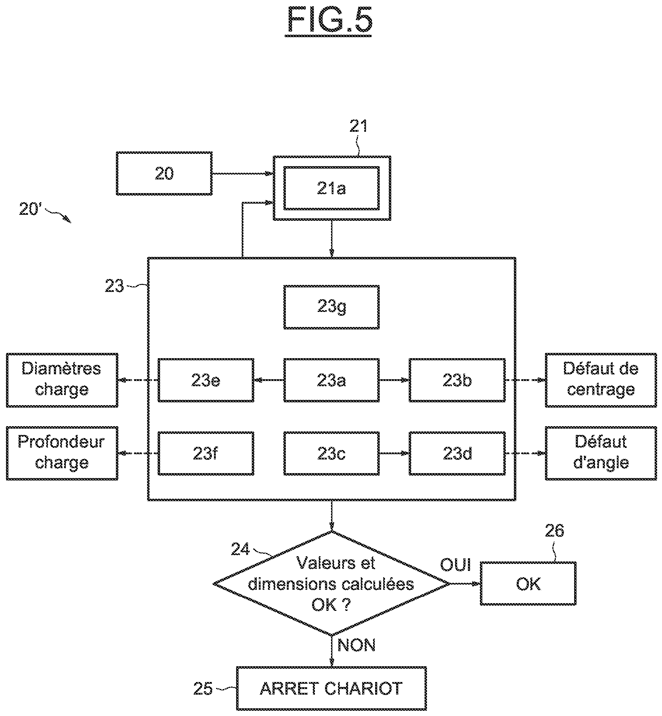

On va maintenant décrire, en référence aux figures 3 à 5, le principe de fonctionnement du chariot 1 élévateur autonome pour l'opération de prise d'une charge 12 annulaire située sur une structure 13 de type rayonnage et le procédé 20' de contrôle du positionnement relatif entre le chariot et la charge 12 illustré en figure 5. Une charge 12 annulaire comprend généralement un support constitué d'une âme cylindrique creuse, généralement muni de rebords de forme circulaire pleins ou à rayons, destiné à recevoir une charge utile qui s'enroule autour de l'âme. La charge utile peut par exemple comprendre un fil, un câble, un tissu ou une bande de gomme, etc. Alternativement, la charge 12 annulaire peut être un pneumatique.

Le procédé 20' commence par une étape 20 préalable de réception dans laquelle le dispositif de télécommunication sans fil 8 du chariot reçoit une instruction relative à une charge annulaire à transporter et constituant une mission attribuée au chariot par le système WMS. L'instruction comprend des informations relatives au type de charge à transporter, aux dimensions de la charge, à la position actuelle de la charge et à la destination de celle-ci. En particulier concernant les dimensions de la charge, l'instruction comprend les valeurs de profondeur de la surface intérieure de la charge et de son diamètre extérieur.

Dans une variante de mise en œuvre, l'instruction relative à une charge annulaire à transporter peut-être prédéfinie et contenue dans une mémoire du chariot élévateur 1. En particulier, les valeurs de profondeur de la surface intérieure et du diamètre extérieur de la charge peuvent être prédéfinies et contenues dans une mémoire du chariot élévateur 1.

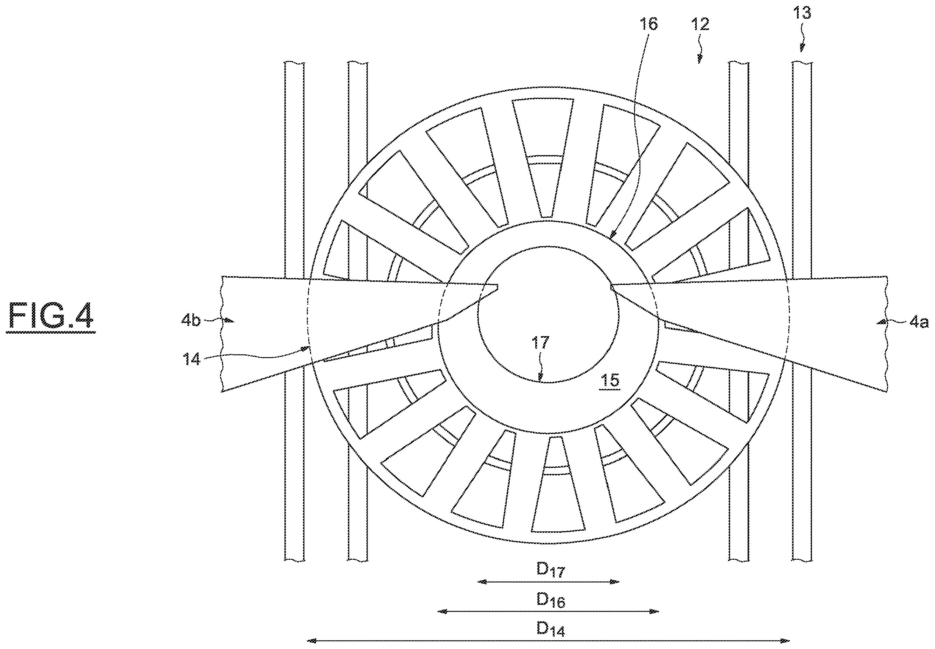

Le procédé 20' se poursuit avec une étape d'acquisition 21 d'au moins une image de la charge annulaire par la caméra 3D 10 qui est commandée par le module vision 11. L'acquisition d'image est réalisée à une distance prédéfinie D1 (figure 3) de la charge 12. Lorsque le chariot se situe à cette distance prédéfinie D1, l'unité de contrôle 9 arrête le chariot 1 et envoie une requête d'acquisition d'images au module vision 11 qui commande la prise d'images de la caméra 3D 10 associée. La caméra 3D 10 capture ainsi au moins une image de la charge 12 située à l'avant du chariot 1 et la renvoie au module vision 11. Un exemple simplifié d'image capturée est illustré en figure 4. Les images capturées par la caméra 3D 10 restituent un nuage de points de coordonnées X1, Y1, Z1 dans le repère R associé à la caméra 3D 10.

De préférence, l'étape d'acquisition 21 comprend une sous-étape 21a préalable de calcul d'un gain optimal de la caméra 3D utilisé pour l'acquisition d'images. On considère que le gain est optimal lorsque les valeurs de luminance d'une image sont uniformément réparties sur l'ensemble de la plage dynamique du capteur d'images. La plage dynamique d'un capteur est égale à la différence entre les niveaux de lumière le plus fort et le plus faible qui puissent être détectés par le capteur.

Afin d'étaler les valeurs de luminance sur l'ensemble de la plage dynamique et pour éviter les valeurs aberrantes, le gain optimal est obtenu à partir de la valeur maximale de la plage dynamique du capteur d'images de la caméra 3D et des valeurs de luminance d'une image déjà acquise dans les conditions de travail données et avec un gain unitaire, et à partir du rapport entre la valeur maximale de la plage dynamique et la valeur de luminance qui correspond au neuvième décile de ladite image.

Après l'étape d'acquisition 21, le procédé se poursuit avec une étape de traitement numérique 23 des images obtenues réalisée par le module vision 11. Il est à noter que le traitement numérique des images peut commencer dès que l'image capturée par la caméra 3D 10 est rendue disponible au module vision 11.

L'étape de traitement numérique comprend une sous-étape de détection 23a de cercles 14, 16 localisés sur une face avant de la charge 12, illustrés sur la figure 4, et d'un cercle 17 localisé sur une face arrière de la charge 12.

La détection des cercles est réalisée de sorte que le cercle 14 est le cercle perçu sur la face avant de la charge et qui correspond à la surface extérieure de la charge 12, et les cercles 16, 17 sont respectivement les cercles perçus sur sa face avant et sur sa face arrière et correspondant à la surface intérieure de la charge 12. La détection des cercles 14, 16 et 17 est réalisée en utilisant des méthodes de détection de cercle connues par exemple du type transformée de Hough.

La sous-étape de détection des cercles 14, 16 intérieur et 17 extérieur est suivie par une sous-étape de calcul 23b d'un décalage mesuré dans un plan perpendiculaire à l'axe de visée (i.e. selon les axes X1 et Y1 du repère R de la figure 2), entre le centre d'un des cercles 14, 16 intérieurs détecté et le centre de la caméra 3D 10 représenté par l'origine du repère R. Ce décalage est représentatif du défaut de centrage du chariot 1 par rapport à la charge 12.

Dans une sous-étape 23e sont déterminés les diamètres extérieur et intérieur de la charge 12. Dans cette étape, on considère que ces diamètres extérieur et intérieur sont égaux aux diamètres D₁₄, D₁₆ (figure 4) des cercles 14 extérieur et 16 intérieur qui sont perçus sur la face avant de la charge. Lors de cette sous-étape 23e, le diamètre D₁₇ du cercle 17 intérieur est également déterminé. La valeur du diamètre D₁₇ est inférieur à celle du diamètre D₁₆ compte tenu de l'angle de fuite de l'image.

L'étape de traitement numérique 23 comprend également une sous-étape 23c de détermination d'un plan qui correspond à la face avant de la charge 12. Cette recherche peut par exemple être réalisée à l'aide d'une méthode itérative basée sur un algorithme de type RANSAC (pour Random Sample Consensus) qui élimine les points aberrants.

Cette sous-étape 23c est suivie d'une sous-étape 23d de calcul de l'angle entre la normale au plan déterminé et l'axe de visée de la caméra 3D 10. Cet angle est représentatif du défaut d'angle du chariot par rapport à la charge.

L'étape de traitement numérique 23 comprend également une sous-étape 23f de calcul de la profondeur P de la charge 12 annulaire.

Dans un mode de mise en œuvre, le calcul de la profondeur P est réalisé à partir des valeurs de diamètres D₁₆ et D₁₇ des cercles 16, 17 déterminés à la sous-étape 23e, et de la valeur de la distance d entre face avant de la charge 12 et la caméra 3D 10 qui est déterminée par celle-ci, en appliquant l'équation suivante : $P = d \times \frac{{D}_{16} - {D}_{17}}{{D}_{17}}$ (Eq.1)

Alternativement, dans un autre mode de mise en œuvre, par exemple lorsque le contraste entre les faces avant et arrière de la charge 12 n'est pas suffisant, la profondeur P de la charge est calculée comme étant égale à l'écart maximal entre les coordonnées des points de la surface intérieure 15 de la charge annulaire 12, mesurés selon l'axe du repère R orienté selon l'axe de visée de la caméra 3D 10.

Après l'étape 23 de traitement numérique, le procédé se poursuit par une étape 24 de comparaison des valeurs calculées lors des sous-étapes 23b, 23d par rapport à des valeurs prédéfinies qui ont été transmises par le système WMS à l'étape 20 ou qui sont stockées dans la mémoire du chariot élévateur.

Lors de l'étape 24 de comparaison, si la valeur calculée de défaut de centrage du chariot par rapport à la charge est supérieure en valeur absolue à une valeur limite associée prédéfinie, l'unité de contrôle 9 commande l'arrêt du chariot 1 pour une remise en ordre par un opérateur (étape 25).

De façon analogue, si la valeur calculée de défaut d'angle du chariot par rapport à la charge est supérieure en valeur absolue à une valeur limite associée prédéfinie, l'unité de contrôle 9 commande l'arrêt du chariot 1 pour une remise en ordre par l'opérateur (étape 25).

Ces deux valeurs limites peuvent être déterminées selon les tolérances admissibles des défauts de centrage et des défauts d'angles relatives aux exigences de sécurité des opérations de levage et de transport.

Lors de l'étape 24, il est également réalisé une comparaison des valeurs calculées lors des sous-étapes 23e, 23f par rapport aux dimensions de la charge reçues à l'étape 20 ou qui est stockée dans la mémoire du chariot élévateur. Si la valeur calculée du diamètre extérieur D₁₄ de la charge est supérieure à la valeur prédéfinie de diamètre extérieur reçue, l'unité de contrôle 9 commande l'arrêt du chariot 1 pour une remise en ordre par l'opérateur (étape 25).

De façon analogue, si la valeur calculée de profondeur de la charge est supérieure à la valeur prédéfinie de profondeur reçue à l'étape 20 ou qui est stockée dans la mémoire du chariot élévateur, l'unité de contrôle 9 commande l'arrêt du chariot 1 pour une remise en ordre par l'opérateur (étape 25).

Lors de l'étape 25 d'arrêt du chariot, l'unité de contrôle 9 peut transmettre au système WMS un message d'erreur représentatif de l'erreur rencontrée.

Au contraire, si les valeurs calculées correspondent aux valeurs prédéfinies associées, l'unité de contrôle du chariot pilote l'opération de levage et de transport (étape 26).

Dans l'exemple de mise en œuvre qui vient d'être décrit, l'étape d'acquisition 21 d'une ou des images est réalisée à la seule distance D1 de la charge 12. Alternativement, l'étape d'acquisition 21 peut comprendre une première sous-étape d'acquisition à la distance D1, suivie d'une deuxième sous-étape d'acquisition à une distance D2 réduite par rapport à la charge qui intervient donc après avancement du chariot.

Cette acquisition en deux temps peut être utile pour des charges de dimensions importantes pour lesquelles l'angle de vision de la caméra 3D 10 peut être trop faible pour capturer à la fois la surface intérieure et la surface extérieure de la charge. Dans ce cas, la première sous-étape d'acquisition est réalisée de sorte à pouvoir calculer le diamètre extérieur de la charge et la deuxième sous-étape d'acquisition est réalisée de sorte à pouvoir calculer le diamètre intérieur et la profondeur de la surface intérieure de la charge 12.

Dans ce cas, il est possible de réaliser les sous-étapes 23b, 23d de calcul du défaut de centrage et du défaut d'angle du chariot par rapport à la charge annulaire après la première sous-étape d'acquisition, et de réaliser les sous-étapes 23f, 23e de calcul de la profondeur et du diamètre extérieur de la charge annulaire après la deuxième sous-étape d'acquisition. Alternativement, il pourrait être possible de réaliser les sous-étapes 23b à 23f après la deuxième sous-étape d'acquisition.

Dans les exemples de mise en œuvre décrits, il est prévu les sous-étapes 23f, 23e de calcul de la profondeur et du diamètre extérieur de la charge annulaire afin d'accroitre la sécurité des opérations. En variante, il serait possible de ne prévoir ces étapes. Dans ce cas, à la sous-étape de détection 23a, seul un des cercles 14 ou 16 peut être détecté.

Dans l'exemple de réalisation illustré, l'étape 23 de traitement numérique comprend une sous-étape supplémentaire 23g préalable de filtrage de points. Cette sous-étape 23g est réalisée avant les autres sous-étapes de l'étape 23 de traitement numérique et permet de réduire la quantité des données à traiter en filtrant les points des images obtenues à l'étape d'acquisition pour ne garder que les points faisant partie d'une région d'intérêt particulier. Par exemple, la surface intérieure 15 de la charge 12 peut constituer une zone d'intérêt particulier. En limitant les calculs aux domaines réduits des zone d'intérêt particulier, le procédé accélère l'obtention des résultats sans dégrader leur qualité. En limitant les données aux zones d'intérêt, la taille de la mémoire nécessaire du module vision 11 est également réduite. Alternativement, il reste possible de ne pas prévoir cette sous-étape 23g de filtrage.

## Revendications

1. Procédé de contrôle du positionnement d'un chariot élévateur autonome par rapport à une charge annulaire à lever et à transporter, ledit chariot comportant une fourche mobile verticalement munie d'au moins un bras, ledit procédé étant **caractérisé en ce qu'**il comprend :
- une étape d'acquisition (21) d'au moins une image de la charge annulaire par au moins une caméra 3D restituant un nuage de points de coordonnées mesurés dans un repère (R) associé à ladite caméra 3D, ladite caméra 3D étant fixée sur le chariot élévateur autonome en étant centrée par rapport à la fourche et ayant un axe de visée orienté vers l'avant selon un axe longitudinal dudit chariot ;
- une étape (23) de traitement numérique de ladite image obtenue à l'étape d'acquisition, comprenant :
• une sous-étape (23a) de détection d'au moins un cercle (14, 16) localisé sur une face avant de la charge annulaire et correspondant au diamètre extérieur ou au diamètre intérieur de la charge annulaire,
• une sous-étape (23b) de calcul d'un décalage, dans un plan perpendiculaire à l'axe de visée, entre le centre dudit cercle détecté et le centre de ladite caméra 3D, ledit décalage étant représentatif d'un défaut de centrage du chariot par rapport à la charge annulaire,
• une sous-étape (23c) de détermination d'un plan correspondant à la face avant de la charge annulaire, et
• une sous-étape (23d) de calcul de l'angle entre la normale audit plan déterminé et l'axe de visée de ladite caméra 3D, ledit angle étant représentatif d'un défaut d'angle du chariot par rapport à la charge annulaire; et
- une étape (25) d'arrêt du chariot si au moins une des valeurs calculées de défaut d'angle ou de défaut de centrage est supérieure en valeur absolue à une valeur limite prédéfinie.

2. Procédé selon la revendication 1, dans lequel l'étape (23) de traitement numérique comprend en outre des sous-étapes (23f, 23e) de calcul de la profondeur (P) et du diamètre extérieur de la charge annulaire, ladite étape (25) d'arrêt du chariot étant réalisée si les valeurs calculées de la profondeur et du diamètre extérieur de la charge annulaire ne correspondent pas à des valeurs prédéfinies.

3. Procédé selon la revendication 2, comprenant en outre une étape (20) préalable de réception par le chariot d'une mission attribuée comprenant les valeurs prédéfinies de la profondeur (P) et du diamètre extérieur de la charge annulaire à transporter.

4. Procédé selon la revendication 2 ou 3, dans lequel le calcul de la profondeur (P) de la charge annulaire est réalisé à partir du cercle (16) intérieur correspondant au diamètre intérieur de ladite charge annulaire et de diamètre (D₁₆), d'un cercle (17) intérieur localisé sur une face arrière de la charge annulaire et correspondant à une surface intérieure de ladite charge et de diamètre (D₁₇), et de la distance (d) entre ladite caméra 3D et la face avant de la charge selon l'équation suivante : $P = d \times \frac{{D}_{16} - {D}_{17}}{{D}_{17}}$ (Eq.1)

5. Procédé selon la revendication 2 ou 3, dans lequel la profondeur (P) de la charge annulaire est égale à l'écart maximal entre les coordonnées des points d'une surface intérieure de la charge annulaire comprise entre le cercle (16) intérieur correspondant au diamètre intérieur de ladite charge annulaire et de diamètre (D₁₆) et un cercle (17) intérieur localisé sur une face arrière de la charge annulaire et correspondant à une surface intérieure de ladite charge annulaire et de diamètre (D₁₇), ledit écart étant mesuré selon l'axe du repère (R) orienté selon l'axe de visée de ladite caméra 3D.

6. Procédé selon l'une quelconque des revendications précédentes, dans lequel l'étape d'acquisition (21) comprend les sous-étapes successives suivantes :
- une première sous-étape d'acquisition d'au moins une image ;
- une sous-étape d'avancement du chariot vers la charge annulaire d'une distance prédéfinie;
- une deuxième sous-étape d'acquisition d'au moins une image réalisée lorsque le chariot a parcouru ladite distance prédéfinie.

7. Procédé selon la revendication 6 dépendante de l'une des revendications 2 à 5, dans lequel les sous-étapes (23b, 23d) de calcul du défaut de centrage et du défaut d'angle du chariot par rapport à la charge annulaire sont réalisées après la première sous-étape d'acquisition, et les sous-étapes (23f, 23e) de calcul de la profondeur (P) et du diamètre extérieur de la charge annulaire sont réalisées après la deuxième sous-étape d'acquisition.

8. Procédé selon l'une quelconque des revendications précédentes, dans lequel la sous-étape (23a) de détection comprend la détection du cercle (16) intérieur correspondant au diamètre intérieur de ladite charge, et du cercle (14) extérieur correspondant au diamètre extérieur de ladite charge annulaire.

9. Procédé selon l'une quelconque des revendications précédentes, dans lequel l'étape (23) de traitement numérique comprend une sous-étape (23g) de filtrage de ladite image obtenue à l'étape d'acquisition qui est réalisée avant les autres sous-étapes de l'étape (23) de traitement numérique.

10. Procédé selon l'une quelconque des revendications précédentes, dans lequel l'étape d'acquisition d'image comprend une sous-étape (21a) préalable de calcul d'un gain optimal de ladite caméra 3D utilisé pour l'acquisition d'images.

11. Procédé selon l'une quelconque des revendications précédentes, dans lequel l'étape d'acquisition (21) de ladite image de la charge annulaire est réalisée par une unique caméra 3D.

12. Chariot (1) élévateur autonome comprenant une fourche (4) mobile verticalement munie d'au moins un bras, au moins une caméra 3D (10) d'acquisition d'au moins une image de données de nuages de points, ladite caméra 3D étant fixée sur le chariot élévateur autonome en étant centrée par rapport à la fourche et ayant un axe de visée orienté vers l'avant selon un axe longitudinal dudit chariot, un module (11) de commande et traitement numérique d'images associé à la caméra 3D (10), un dispositif de télécommunication sans fil (8), ainsi qu'une unité de contrôle (9) dudit chariot configurée pour l'exécution d'un procédé selon l'une quelconque des revendications 1 à 11.

13. Chariot selon la revendication 12, dans lequel l'axe de visée de ladite caméra 3D (10) est horizontal et parallèle à l'axe longitudinal dudit bras de la fourche (4).

14. Chariot selon la revendication 12 ou 13, dans lequel l'axe de visée de ladite caméra 3D (10) est situé à une distance inférieure à 100 mm d'un plan horizontal contenant ledit bras de la fourche.

## Patentansprüche

1. Verfahren zum Steuern der Positionierung eines autonomen Hubwagen in Bezug auf eine zu hebende und zu transportierende ringförmige Last, wobei der Wagen eine vertikal bewegliche Gabel aufweist, die mit mindestens einem Arm versehen ist, wobei das Verfahren **dadurch gekennzeichnet ist, dass** es umfasst:
- einen Schritt (21) des Erfassens mindestens eines Bildes der ringförmigen Last durch mindestens eine 3D-Kamera, die eine Wolke von Koordinatenpunkten wiedergibt, die in einem der 3D-Kamera zugeordneten Koordinatensystem (R) gemessen werden, wobei die 3D-Kamera an dem autonomen Hubwagen befestigt ist, wobei sie in Bezug auf die Gabel zentriert ist und eine nach vorn entlang einer Längsachse des Wagens ausgerichtete Sichtachse hat;
- einen Schritt (23) des digitalen Verarbeitens des im Schritt des Erfassens erhaltenen Bildes, umfassend:
• einen Teilschritt (23a) des Detektierens mindestens eines Kreises (14, 16), der an einer Vorderseite der ringförmigen Last lokalisiert ist und dem Außendurchmesser oder dem Innendurchmesser der ringförmigen Last entspricht,
• einen Teilschritt (23b) des Berechnens eines Versatzes, in einer senkrecht zu der Sichtachse verlaufenden Ebene, zwischen dem Mittelpunkt des detektierten Kreises und dem Mittelpunkt der 3D-Kamera, wobei der Versatz für einen Zentrierfehler des Wagens in Bezug auf die ringförmige Last repräsentativ ist,
• einen Teilschritt (23c) des Bestimmens einer Ebene, die der Vorderseite der ringförmigen Last entspricht, und
• einen Teilschritt (23d) des Berechnens des Winkels zwischen der zu der bestimmten Ebene verlaufenden Normalen und der Sichtachse der 3D-Kamera, wobei der Winkel für einen Winkelfehler des Wagens in Bezug auf die ringförmige Last repräsentativ ist; und
- einen Schritt (25) des Anhaltens des Wagens, wenn mindestens einer der berechneten Winkelfehler- oder Zentrierfehlerwerte betragsmäßig größer als ein vordefinierter Grenzwert ist.

2. Verfahren nach Anspruch 1, wobei der Schritt (23) des digitalen Verarbeitens ferner Teilschritte (23f, 23e) des Berechnens der Tiefe (P) und des Außendurchmessers der ringförmigen Last umfasst, wobei der Schritt (25) des Anhaltens des Wagens ausgeführt wird, wenn die berechneten Werte der Tiefe und des Außendurchmessers der ringförmigen Last nicht vordefinierten Werten entsprechen.

3. Verfahren nach Anspruch 2, umfassend ferner einen vorherigen Schritt (20) des Empfangens eines zugewiesenen Auftrags, der die vordefinierten Werte der Tiefe (P) und des Außendurchmessers der zu transportierenden ringförmigen Last umfasst, durch den Wagen.

4. Verfahren nach Anspruch 2 oder 3, wobei das Berechnen der Tiefe (P) der ringförmigen Last ausgehend von dem inneren Kreis (16), der dem Innendurchmesser der ringförmigen Last entspricht und den Durchmesser (D₁₆) hat, von einem inneren Kreis (17), der auf einer Rückseite der ringförmigen Last lokalisiert ist und einer inneren Fläche der Last entspricht und den Durchmesser (D₁₇) hat, und von dem Abstand (d) zwischen der 3D-Kamera und der Vorderseite der Last nach der folgenden Gleichung ausgeführt wird: $P = d \times \frac{{D}_{16} - {D}_{17}}{{D}_{17}}$ (Gl. 1)

5. Verfahren nach Anspruch 2 oder 3, wobei die Tiefe (P) der ringförmigen Last gleich der maximalen Abweichung ist zwischen den Koordinaten der Punkte einer inneren Fläche der ringförmigen Last zwischen dem inneren Kreis (16), der dem Innendurchmesser der ringförmigen Last entspricht und den Durchmesser (D₁₆) hat, und einem inneren Kreis (17), der auf einer Rückseite der ringförmigen Last lokalisiert ist und einer inneren Fläche der ringförmigen Last entspricht und den Durchmesser (D₁₇) hat, wobei die Abweichung entlang der Achse des Koordinatensystems (R) gemessen wird, die entlang der Sichtachse der 3D-Kamera ausgerichtet ist.

6. Verfahren nach einem der vorhergehenden Ansprüche, wobei der Schritt (21) des Erfassens die folgenden aufeinanderfolgenden Teilschritte umfasst:
- einen ersten Teilschritt des Erfassens mindestens eines Bildes;
- einen Teilschritt des Vorfahrens des Wagens zu der ringförmigen Last hin um einen vordefinierten Abstand;
- einen zweiten Teilschritt des Erfassens mindestens eines Bildes, der ausgeführt wird, wenn der Wagen den vordefinierten Abstand zurückgelegt hat.

7. Verfahren nach Anspruch 6, wenn abhängig von einem der Ansprüche 2 bis 5, wobei die Teilschritte (23b, 23d) des Berechnens des Zentrierfehlers und des Winkelfehlers des Wagens in Bezug auf die ringförmige Last nach dem ersten Teilschritt des Erfassens ausgeführt werden und die Teilschritte (23f, 23e) des Berechnens der Tiefe (P) und des Außendurchmessers der ringförmigen Last nach dem zweiten Teilschritt des Erfassens ausgeführt werden.

8. Verfahren nach einem der vorhergehenden Ansprüche, wobei der Teilschritt (23a) des Detektierens das Detektieren des inneren Kreises (16), der dem Innendurchmesser der Last entspricht, und des äußeren Kreises (14), der dem Außendurchmesser der ringförmigen Last entspricht, umfasst.

9. Verfahren nach einem der vorhergehenden Ansprüche, wobei der Schritt (23) des digitalen Verarbeitens einen Teilschritt (23g) des Filterns des in dem Schritt des Erfassens erhaltenen Bildes umfasst, der vor den anderen Teilschritten des Schritts (23) des digitalen Verarbeitens ausgeführt wird.

10. Verfahren nach einem der vorhergehenden Ansprüche, wobei der Schritt des Erfassens eines Bildes einen vorherigen Teilschritt (21a) des Berechnens einer optimalen Verstärkung der zum Erfassen von Bildern verwendeten 3D-Kamera umfasst.

11. Verfahren nach einem der vorhergehenden Ansprüche, wobei der Schritt des Erfassens (21) des Bildes der ringförmigen Last von einer einzigen 3D-Kamera ausgeführt wird.

12. Autonomer Hubwagen (1), umfassend eine vertikal bewegliche Gabel (4), die mit mindestens einem Arm versehen ist, mindestens eine 3D-Kamera (10) zum Erfassen mindestens eines Bildes aus Daten von Punktwolken, wobei die 3D-Kamera an dem autonomen Hubwagen befestigt ist, wobei sie in Bezug auf die Gabel zentriert ist und eine nach vorn entlang einer Längsachse des Wagens ausgerichtete Sichtachse hat, ein der 3D-Kamera (10) zugeordnetes Modul (11) zur Bedienung und digitalen Verarbeitung von Bildern, eine drahtlose Telekommunikationsvorrichtung (8) sowie eine Steuereinheit (9) für den Wagen, die zum Ausführen eines Verfahrens nach einem der Ansprüche 1 bis 11 ausgelegt ist.

13. Wagen nach Anspruch 12, wobei die Sichtachse der 3D-Kamera (10) horizontal und parallel zur Längsachse des Arms der Gabel (4) verläuft.

14. Wagen nach Anspruch 12 oder 13, wobei die Sichtachse der 3D-Kamera (10) in einem Abstand von weniger als 100 mm von einer den Arm der Gabel enthaltenden horizontalen Ebene gelegen ist.

## Claims

1. Method for controlling the positioning of an autonomous forklift relative to an annular load to be lifted and transported, said forklift comprising a vertically movable fork provided with at least one arm, said method being **characterized in that** it comprises:
- a step (21) of acquiring at least one image of the annular load by means of at least one 3D camera rendering a point cloud of coordinates measured in a coordinate system (R) associated with said 3D camera, said 3D camera being fastened to the autonomous forklift centred relative to the fork and having a line of sight oriented forwards along a longitudinal axis of said forklift;
- a step (23) of digitally processing said image obtained in the acquisition step, comprising:
• a sub-step (23a) of detecting at least one circle (14, 16) located on a front face of the annular load and corresponding to the outer diameter or inner diameter of the annular load,
• a sub-step (23b) of calculating an offset, in a plane perpendicular to the line of sight, between the centre of said detected circle and the centre of said 3D camera, said offset representing a centring error of the forklift relative to the annular load,
• a sub-step (23c) of determining a plane corresponding to the front face of the annular load, and
• a sub-step (23d) of calculating the angle between the normal to said determined plane and the line of sight of said 3D camera, said angle representing an angle error of the forklift relative to the annular load, and
- a step (25) of stopping the forklift if at least one of the calculated angle error or centring error values is greater, as an absolute value, than a predefined limit value.

2. Method according to Claim 1, wherein the digital processing step (23) further comprises sub-steps (23f, 23e) of calculating the depth (P) and the outer diameter of the annular load, said step (25) of stopping the forklift being carried out if the calculated vales of the depth and the outer diameter of the annular load do not correspond to predefined values.

3. Method according to Claim 2, further comprising a prior step (20) of the forklift receiving an assigned mission comprising the predefined values of the depth (P) and the outer diameter of the annular load to be transported.

4. Method according to Claim 2 or 3, wherein the depth (P) of the annular load is calculated on the basis of the inner circle (16) corresponding to the inner diameter of said annular load and having a diameter (D₁₆), an inner circle (17) located on a rear face of the annular load and corresponding to an inner surface of said annular load and having a diameter (D₁₇), and the distance (d) between said 3D camera and the front face of the load, using the following equation: $P = d \times \frac{{D}_{16} - {D}_{17}}{{D}_{17}}$ (Eq.1)

5. Method according to Claim 2 or 3, wherein the depth (P) of the annular load is equal to the maximum difference between the coordinates of the points of an inner surface of the annular load between the inner circle (16) corresponding to the inner diameter of said annular load and having a diameter (D₁₆), and an inner circle (17) located on a rear face of the annular load and corresponding to an inner surface of said annular load and having a diameter (D₁₇), said difference being measured along the axis of the coordinate system (R) oriented along the line of sight of said 3D camera.

6. Method according to any one of the preceding claims, wherein the acquisition step (21) comprises the following successive sub-steps:
- a first sub-step of acquiring at least one image;
- a sub-step of advancing the forklift towards the annular load by a predefined distance;
- a second sub-step of acquiring at least one image carried out when the forklift has covered said predefined distance.

7. Method according to Claim 6 as dependent on one of Claims 2 to 5, wherein the sub-steps (23b, 23d) of calculating the centring error and the angle error of the forklift relative to the annular load are carried out after the first acquisition sub-step, and the sub-steps (23f, 23e) of calculating the depth (P) and outer diameter of the annular load are carried out after the second acquisition sub-step.

8. Method according to any one of the preceding claims, wherein the detection sub-step (23a) comprises detecting the inner circle (16) corresponding to the inner diameter of said load, and detecting the outer circle (14) corresponding to the outer diameter of said annular load.

9. Method according to any one of the preceding claims, wherein the digital processing step (23) comprises a sub-step (23g) of filtering said image obtained in the acquisition step that is carried out before the other sub-steps of the digital processing step (23).

10. Method according to any one of the preceding claims, wherein the image acquisition step comprises a prior sub-step (21a) of calculating an optimum gain of said 3D camera used for image acquisition.

11. Method according to any one of the preceding claims, wherein the step (21) of acquiring said image of the annular load is carried out by a single 3D camera.

12. Autonomous forklift (1) comprising a vertically movable fork (4) provided with at least one arm, at least one 3D camera (10) for acquiring at least one point cloud data image, said 3D camera being fastened to the autonomous forklift centred relative to the fork and having a line of sight oriented forwards along a longitudinal axis of said forklift, a command and digital image processing module (11) associated with the 3D camera (10), a wireless telecommunication device (8), and a unit (9) for controlling said forklift configured to implement a method according to any one of Claims 1 to 11.

13. Forklift according to Claim 12, wherein the line of sight of said 3D camera (10) is horizontal and parallel to the longitudinal axis of said arm of the fork (4).

14. Forklift according to Claim 12 or 13, wherein the line of sight of said 3D camera (10) is situated at a distance of less than 100 mm from a horizontal plane containing said arm of the fork.
